# EUROPEAN PATENT SPECIFICATION

(11) **EP 3 687 473 B1**
(45) Date of publication and mention of the grant of the patent: **15.06.2022**
(21) Application number: 18800690.2
(22) Date of filing: 27.09.2018
(51) Int. Cl.: A61H 33/00, A61H 33/06, G05D 23/19

(54) **METHOD AND APPARATUS FOR CONTROLLING SAUNA STOVE**
VERFAHREN UND VORRICHTUNG ZUR STEUERUNG EINES SAUNAOFENS
PROCÉDÉ ET APPAREIL PERMETTANT DE COMMANDER UN POÊLE DE SAUNA

(30) Priority: 27.09.2017 FI 20175857
(43) Date of publication of application: 05.08.2020
(73) Proprietor: Yli-Kovero, Risto Tapio, 13100 Hämeenlinna (FI)
(72) Inventor: Yli-Kovero, Risto Tapio, 13100 Hämeenlinna (FI)
(74) Representative: Espatent Oy
(86) International application number: PCT/FI2018/050695
(87) International publication number: WO 2019/063883

(56) References cited:
- EP-A1- 2 902 865
- DE-U1- 20 021 426
- DE-U1- 20 212 240

## Description

### TECHNICAL FIELD

The present invention generally relates to controlling a sauna stove.

### BACKGROUND ART

This section illustrates useful background information without admission of any technique described herein representative of the state of the art.

High-power free-standing stoves generally have a separate control center outside the sauna. There are, running from this control center, a supply cable for the sauna stove and a cable onto a wall of the sauna proximate the ceiling, where there are a sauna temperature sensor and an overheating protection.

In the control center of the stove, the desired temperature of the sauna and possible settings are set. The control center may be connected to a real estate supervision that adjust the switched-on state of the stove bypassing a timer function of the stove. The switched-on state of the sauna can also be controlled by a mobile device or via the Internet.

Technically, the control of switched-on state of the stove and sauna temperature control are implemented by adjusting power supply of the stove by contactors. The contactors connect the power supply to stove when the stove goes on. When the temperature of the sauna reaches a set value, the contactors are switched off.

The control of the contactors is connected to the overheating protection of the sauna such that in an overheating situation, an overheating circuit is broken and the control of the contactors disconnects the power supply to the resistors.

Most of the free standing stoves that stand on a floor are equipped simply by a control without a remote operability option i.e. the user has to physically go to the stove control center to switch on the stove.

DE20021426U1 discloses, according to a machine translation of its abstract, an electric sauna heater control device which includes power supply devices for supplying the electric heating resistors arranged in the electric sauna heater with power and a temperature sensor which is arranged separately from the electric sauna heater or is integrated in it, and which controls the power supply devices as a function of the temperature. As such, this publication would present a remote controlled power supply to a sauna stove.

### SUMMARY

It is an object of the invention to provide a new alternative for controlling the stove, e.g., for enabling remote operation.

The appended claims define the scope of protection. Any examples and technical descriptions of apparatuses, products and/or methods in the description and/or drawings not covered by the claims are presented not as embodiments of the invention but as background art or examples useful for understanding the invention.

The overheating protection may be configured to trigger at risk of overheating so that manual action is required to heat the stove again.

The first and second control may comprise mutually separate first and second electronics. The first electronics may comprise at least one processor or logic circuitry. The second electronics may comprise at least one processor or logic circuitry.

The second control may be installed without preventing operation of the first control.

The power supply of the stove may be controlled by a local control circuitry that receives a temperature information of the sauna and performs said controlling of the power supply of the stove using the temperature information that the local control circuitry has received.

Temperature information may be repeatedly sent to a remote control equipment. The control data may be received from the remote control equipment, which control data is determined based on the sent temperature data. The power supply of the stove may be controlled using the control data.

The accessory device may comprise one or more third sensors for producing the measurement data describing conditions of the sauna. Said one or more third sensors may be chosen from a group that consists of the following: a temperature sensor; a humidity sensor; a sound volume sensor; a light sensor; an air pressure sensor; and an infrared sensor.

The second control may comprise a communication circuitry for receiving the control data.

The sauna may be a sauna that is heated to at least 50 °C, 60 °C or 70 °C.

Different embodiments of the present invention are described or have been described only in connection with some example aspect or aspects. It should be appreciated by the skilled person any embodiment of some aspect may be applied in the same aspect and in other aspects alone or in conjunction with other embodiments.

### BRIEF DESCRIPTION OF THE DRAWINGS

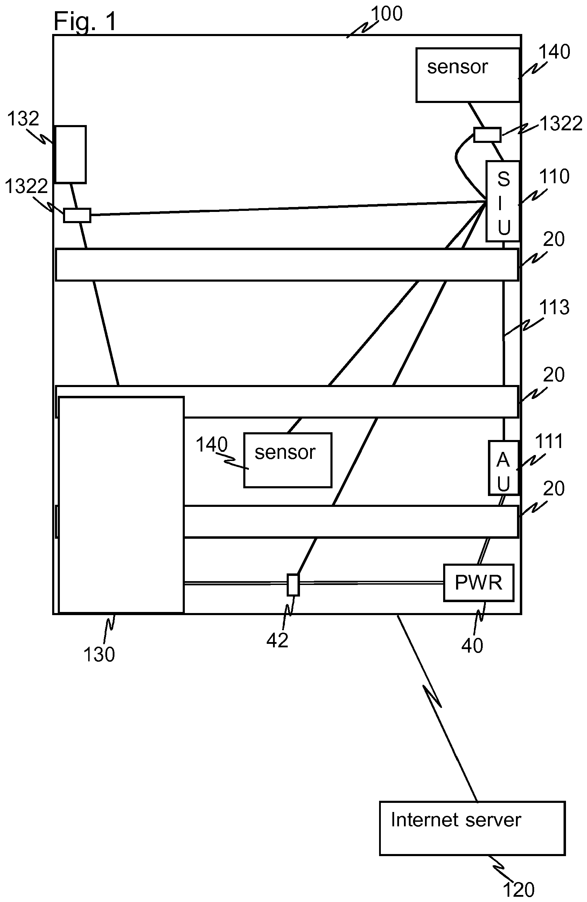

The invention will be described with reference to the accompanying Fig. 1 that schematically shows from the side an example sauna.

### DETAILED DESCRIPTION

In the following description, like reference signs denote like elements or steps. It should be appreciated that the Figures are not entirely in scale and they serve merely the purpose of illustration.

Fig. 1 shows a sauna to which there is installed a control circuitry 110, 111 functionally in parallel with the own control of a stove 130. The control circuitry 110, 111 stores measurement data describing conditions in the sauna, such as temperatures at different moments of time, and sends them over, e.g., the Internet, to a control unit i.e. remote control equipment 120 that is auxiliary to and controls the stove 130. The control circuitry 110, 111 has an output to a controllable switch 1322 such as a relay in an overheat protection circuit 132 of the stove 130 or in the sauna temperature sensor circuit, which controllable switch 1322 interrupts the circuit 132 in question when the power supply of the stove is desired to be interrupted. Namely, in some electric stoves, interrupting of the temperature sensor circuit used in the sauna temperature control causes switching off the stove and interrupting the overheating protection circuit should also control the stove switched off. In the control circuitry 110, 111 there is an input for receiving said measurement data from one or more sensors 140.

The control circuitry 110, 111 may be placed in the same housing together with at least one sensor 140 that measures conditions of the sauna 100. Additionally, or alternatively, there may be inputs in the control circuitry 110, 111 for the sensors 140 for receiving measurement data from sensors 140 that are to be placed outside the housing. The housing may be placed, e.g., near the stove 130 or, e.g., under the sauna bench in a cool space or alternatively e.g. at height of shoulders of people sitting on an uppermost sauna bench 20.

The sensor or sensors 140 measuring conditions of the sauna are added to sauna 100 in addition to the temperature sensor or sensors of the own control system of the stove 130. Thanks to sensoring not belonging to the own control system of the stove 130, the control circuitry 110, 111 and sensors 140 enabling its operation can, e.g., be removed without preventing normal operation of the stove 130.

The control circuitry 110, 111 may comprise a sensor unit 110. The sensor unit 110 may be placed in connection of the sensors 140 that measure conditions in the sauna 100. The control circuity 110, 111 may comprise a processor, memory and program code to be executed in the memory of the processor so that the operation of the control circuity 110, 111 is at least partially implementable programmably..

With the system of Fig. 1 it is possible to adjust over the Internet the temperature of the sauna 100, time the stove 130 for a desired period of time (assuming that the own power supply of the stove 130 is continuously switched on or the desired period of time coincides within the normal switching on period of the stove, e.g., in a switching on period of a programming of a week timer). With the system of Fig. 1, it is possible to give to settings made remotely different sauna temperature settings, typically within the sauna temperature limits set in the own control system of the stove 130.

The control circuitry 110, 111 can control the stove 130 alternatively or additionally without control data received from the control unit 120 with local control. In this case, the control circuitry 110, 111 may comprise a local user interface or provide, e.g., with a web server the making of local control settings, e.g., with a browser using the web server page of the control circuitry. The local control settings may comprise, e.g., the switching on and off times of the stove 130, target temperatures for different switching on periods or a general target temperature.

By repeatedly interrupting the power supply of the stove 130 through the overheating protection circuit 132 or the temperature measurement circuit the temperature of the sauna 100 may be both timed and adjusted for each timing irrespective of other timings, which is not possible with the ordinary continuously heated stoves

As an alternative to control made through the overheating protection circuitry 132 or the temperature measurement circuitry, the control can be implemented by controlling additional contactors 42 installed to the power supply 40 of the stove 130 or the own contactors of the stove by the control circuitry 110, 111. A control system directly or indirectly affecting to the own contactors of the stove 130 may include a technical risk in that an erroneous connection may cause a risk of fire. In addition, direct interfering with the operation of the contactors may cause a liability problem, e.g., in the lacking clarity of that whether the warranty of the stove is in force and who is responsible if the stove is broken, especially if the braking of causes a destructive fire.

By repeatedly interrupting the overheating protection circuit 132 or the temperature measurement circuit the construction of the stove is not interfered with and the normal operation of the safety systems of the stove 130 are not disturbed. When 12 or 24 V voltage and low current are used for controlling a relay in the overheating protection or temperature measurement circuit, different risks may be avoided. If the relay or its control somehow gets damaged or inoperable, the normal stove overheating protection switches off the stove 130 unless the own temperature control of the stove 130 does not already prevent the sauna 100 from heating even up to the limit of the overheating protection. The control circuitry 110, 111 of Fig. 1 may be an addition installed in the sauna 100 to operate simultaneously with the own control system of the stove 130, which addition uses an auxiliary temperature measurement brought additionally to the temperature measurement of the own control system of the stove. Significant energy saving is achievable by using the control system according to Fig. 1, because the switching of the sauna 100 i.e. the heating period and temperature of the stove 130 can be directed more accurately to desired point of time.

In swim halls and other saunas that are on for long periods of time, the temperature of sauna can be adjusted by the intensity of using the sauna. Typically, the sauna is in little use at daytime and crowded in the evenings. The temperature of the sauna must be adjusted for the rush hours high, e.g., to 100 degrees of Celsius, so that the stove would not run out of steam generation power. Then a half empty sauna will be burning hot at daytime, energy is consumed and the panels of the sauna dry out in the continuous heat. With a control of Fig. 1 embodiment, the temperature of the sauna 100 can be controlled, e.g., so that on daytime, it is 70 °C in the sauna 100 and in the evening 100 °C. The energy saving so achieved has a significant meaning at annual level.

Similar control can be implemented in saunas of blocks of flats, where each sauna turn can be set a temperature desired by the sauna goer. In a block of flats sauna there is the problem that some people want to have a moist 60-70 degree Celsius sauna and others a more dry 90-100 degree Celsius sauna. Often, the temperature is set as a compromise to around 80 degrees Celsius and people quarrel about the temperature. The lower temperature setting saves energy particularly much when there are empty turns between the sauna turns, during which the sauna is in vain burning hot instead of the temperature of sauna being temporarily lowered.

The control circuitry 110, 111 may measure or receive also other measurement quantities relating to the sauna or going to sauna, such as results of two or more parallel sauna 100 temperature measurements, sauna 100 air humidity, sauna air carbon dioxide concentration, and noise in the sauna 100 i.e. sound volume. The control circuitry 110, 111 may relay to the remote control equipment 120 the measurement data it has measured or received in addition to the temperature.

In the control of the stove 130 of the sauna 100, it may be used as a basis of control in addition to the temperature one or more further measurement data, such as the humidity of the air of the sauna 100 (e.g., relative humidity).

The control circuitry 110, 111 can store (e.g., buffer one hour, day or week of) measurement data, based on which the sauna going can be supervised and also afterwards it can be deduced whether people have been to the sauna and what has been likely done there.

The invention can also be applied to a stove 130, the control of which is inside the stove 130, e.g., in its lower part. In this case, instead of the overheating circuitry or temperature measurement circuit, it may be repeatedly interrupted the power supply based on the auxiliary temperature measurement without need to disassemble the stove 130. Also in this application, interfering with the own control and safety system of the stove 130 is avoided.

In practice, the control for the stove 130 can be so implemented that in the stove 130 the sauna 100 temperature is adjusted to such an allowed temperature that is not intended to be exceeded. A controllable switch 42, 1322 connected to the power supply of the stove 130, temperature measurement circuit or overheating protection circuit 132, interrupts heating when the auxiliary control observes that the sauna 100 temperature has reached the setting value given to the control circuitry 110, 111.

The time limits for continuous switched on times of an apartment stove disallow free timing. In some countries, free timing is only allowed when the sauna is under constant supervision, which is deemed to be the situation in a swimming hall, for example, when there is any personnel regardless of the true level of supervision.

According to an embodiment, there is provided in addition to the stove 130 control two mutually independent temperature measurements by comparing of which the control circuitry 110, 111 monitors the condition of the temperature measurements and the accuracy of the measurement. Such a continuous temperature monitoring and reporting of deviations joined therein may offer a more reliable temperature supervision than that possible to provide by an on-duty swim guard or janitor could do.

Among the conditions of the sauna there may be also the temperature of the ceiling of the sauna 100, in which case the sauna 100 is in a multiple supervision. Additionally, sauna 100 air carbon dioxide concentration and sauna 100 noise level may be used in attempt to ensure that no unconscious sauna goer would be left in the sauna 100, which would appear as elevated air carbon dioxide concentration and long-lasting silence.

The foregoing description has provided by way of non-limiting examples of some implementations and embodiments of the invention. It is however clear to a person skilled in the art that the invention is not restricted to details of the embodiments presented in the foregoing, but that it can be implemented in other equivalent ways.

Some of the features of the afore-disclosed embodiments of this invention may be used to advantage without the use of other features. As such, the foregoing description shall be considered as merely illustrative of the principles of the present invention, and not in limitation thereof. Hence, the scope of the invention is only restricted by the appended patent claims.

## Claims

1. A method for controlling a sauna stove (130) in a sauna, which sauna stove (130) has a first control for controlling heating of the sauna stove, the first control comprising, for controlling the stove, a first temperature sensor, a temperature control circuit and optionally an
overheating protection (132) of the sauna stove;
**characterized by**:
controlling the sauna stove using an accessory device configured to provide a second control that is functionally parallel with the first control, by causing by the second control:
measuring temperature of the sauna by a second temperature sensor (140) of the second control;
controlling the sauna stove (130), based on the temperature measured by the second sensor (140), by repeatedly interrupting power supply of the sauna stove (130) by interrupting the temperature control circuit of the first control, the overheating protection (132) of the first control, or the power supply (40);
wherein the first control is adjusted to a first temperature that is not intended to be exceeded.

2. The method of claim 1, **characterized in that** the
temperature of the sauna is locally controlled by the second control based on control settings received with a user interface of a control circuitry (110, 111) of the second control.

3. The method of claim 1, **characterized in that** the
temperature of the sauna is locally controlled by the second control based on control settings received with a web server of a control circuitry (110, 111) of the second control.

4. An accessory device for controlling heating of a sauna stove (100) that has a first control for controlling heating of the sauna stove, the first control comprising, for controlling the stove, a first temperature sensor, a temperature control circuit and optionally an overheating protection (132) of the sauna stove;
**characterized by** the accessory device comprising a second control that is functionally parallel with the first control and comprises:
a second temperature sensor (140) for measuring temperature of the sauna; and
a control circuitry (110, 111) for controlling the sauna stove (130), based on the temperature measured by the second temperature sensor (140), by using interrupting means to repeatedly interrupting power supply of the sauna stove (130) by interrupting the temperature control circuit of the first control, the overheating protection (132) of the first control, or the power supply (40);
wherein the first control is adjusted to a first temperature that is not intended to be exceeded.

5. The accessory device of claim 4, **characterized in that** the control circuitry (110, 111) comprises a local user interface for receiving control settings and the control circuitry is configured to locally control the sauna stove based on the control settings.

6. The accessory device of claim 4, **characterized in that** the control circuitry (110, 111) comprises a web server for receiving control settings and the control circuitry is configured to locally control the sauna stove based on the control settings.

7. The accessory device of any one of claims 5 to 6, **characterized in that** the control circuitry (110, 111) comprises means for relaying the temperature measured by the second temperature sensor (140) to remote control equipment (120).

8. The accessory device of claim 7; **characterized in that** the control circuitry (110, 111) comprises means for receiving control data from the remote equipment (120 and by said control circuitry being arranged to use the received control data in controlling the stove (130) or the sauna (100).

9. The accessory device of claim 7 or 8, **characterized in that** the control circuitry (110, 111) comprises means for buffering measurement data describing conditions in the sauna (130) and for transmitting the buffered measurement data to the remote control equipment (120).

10. The accessory device of any one of claims 4 to 9, **characterized by** comprising two mutually independent second temperature sensors (140).

11. The accessory device of claim 10; **characterized in that** the accessory device
comprises means for comparing temperatures measured by the two mutually independent second temperature sensors (140) and for implementing an overheating protection based on the measured temperatures so that when the temperature measured from the sauna (100) reaches to a determined limit or the temperature measurements measured by different second sensors (140) develops in a determined way, the control equipment interrupts the power supply of the sauna (100) stove (130).

12. The accessory device of any one of claims 5 to 11; **characterized by**:
a third sensor arranged to measure from the air of the sauna (100) humidity, noise, or carbon dioxide concentration; and
means for controlling the stove (130) based on the temperature measured from the sauna (100) and a quantity measured by the third sensor.

13. A sauna comprising:
a sauna stove (100) that has a first control for controlling heating of the sauna stove, the first control comprising, for controlling the stove, a first temperature sensor , a temperature control circuit and optionally an overheating protection (132) of the sauna stove; and
the accessory device of any one of claims 4 to 12 for controlling heating of the sauna stove (100).

## Patentansprüche

1. Verfahren zum Steuern eines Saunaofens (130) in einer Sauna, wobei der Saunaofen (130) eine erste Steuerung zum Steuern von Heizen des Saunaofens aufweist, wobei die erste Steuerung zum Steuern des Ofens einen ersten Temperatursensor, eine Temperatursteuerschaltung und optional einen Überhitzungsschutz (132) des Saunaofens umfasst;
**gekennzeichnet durch**:
Steuern des Saunaofens unter Verwendung einer Zusatzeinrichtung, die so konfiguriert ist, dass sie eine zweite Steuerung bereitstellt, die funktional parallel zu der ersten Steuerung ist, indem sie durch die zweite Steuerung veranlasst:
Messen von Temperatur der Sauna durch einen zweiten Temperatursensor (140) der zweiten Steuerung;
Steuern des Saunaofens (130) auf der Grundlage der von dem zweiten Sensor (140) gemessenen Temperatur durch wiederholtes Unterbrechen von Stromversorgung des Saunaofens (130) durch Unterbrechen der Temperatursteuerschaltung der ersten Steuerung, des Überhitzungsschutzes (132) der ersten Steuerung oder der Stromversorgung (40);
wobei die erste Steuerung auf eine erste Temperatur eingestellt ist, die nicht überschritten werden soll.

2. Verfahren nach Anspruch 1, **dadurch gekennzeichnet, dass** die Temperatur der Sauna lokal durch die zweite Steuerung auf der Grundlage von Steuereinstellungen gesteuert wird, die mit einer Benutzerschnittstelle einer Steuerschaltung (110, 111) der zweiten Steuerung empfangen werden.

3. Verfahren nach Anspruch 1, **dadurch gekennzeichnet, dass** die Temperatur der Sauna lokal durch die zweite Steuerung auf der Grundlage von Steuereinstellungen gesteuert wird, die mit einem Webserver einer Steuerschaltung (110, 111) der zweiten Steuerung empfangen werden.

4. Zusatzeinrichtung zur Steuerung von Heizen eines Saunaofens (100), der eine erste Steuerung zum Steuern von Heizen des Saunaofens aufweist, wobei die erste Steuerung zum Steuern des Ofens einen ersten Temperatursensor, eine Temperatursteuerschaltung und optional einen Überhitzungsschutz (132) des Saunaofens umfasst;
**gekennzeichnet durch** die Zusatzeinrichtung, umfassend eine zweite Steuerung, die funktional parallel zu der ersten Steuerung ist und umfasst:
einen zweiten Temperatursensor (140) zum Messen von Temperatur der Sauna; und
eine Steuerschaltung (110, 111) zum Steuern des Saunaofens (130) auf der Grundlage der von dem zweiten Temperatursensor (140) gemessenen Temperatur, durch Verwendung von Unterbrechungsmitteln zum wiederholten Unterbrechen von Stromversorgung des Saunaofens (130) durch Unterbrechen der Temperatursteuerschaltung der ersten Steuerung, des Überhitzungsschutzes (132) der ersten Steuerung oder der Stromversorgung (40);
wobei die erste Steuerung auf eine erste Temperatur eingestellt ist, die nicht überschritten werden soll.

5. Zusatzeinrichtung nach Anspruch 4, **dadurch gekennzeichnet, dass** die Steuerschaltung (110, 111) eine lokale Benutzerschnittstelle zum Empfangen von Steuereinstellungen umfasst und die Steuerschaltung so konfiguriert ist, dass sie den Saunaofen auf der Grundlage der Steuereinstellungen lokal steuert.

6. Zusatzeinrichtung nach Anspruch 4, **dadurch gekennzeichnet, dass** die Steuerschaltung (110, 111) einen Webserver zum Empfangen von Steuereinstellungen umfasst und die Steuerschaltung so konfiguriert ist, dass sie lokal den Saunaofen auf der Grundlage der Steuereinstellungen steuert.

7. Zusatzeinrichtung nach einem der Ansprüche 5 bis 6, **dadurch gekennzeichnet, dass** die Steuerschaltung (110, 111) Mittel zum Weiterleiten der von dem zweiten Temperatursensor (140) gemessenen Temperatur an Fernsteuergerät (120) umfasst.

8. Zusatzeinrichtung nach Anspruch 7, **dadurch gekennzeichnet, dass** die Steuerschaltung (110, 111) Mittel zum Empfangen von Steuerdaten von dem Ferngerät (120) umfasst und dass die Steuerschaltung so angeordnet ist, dass sie die empfangenen Steuerdaten zum Steuern des Ofens (130) oder der Sauna (100) verwendet.

9. Zusatzeinrichtung nach Anspruch 7 oder 8, **dadurch gekennzeichnet, dass** die Steuerschaltung (110, 111) Mittel zum Puffern von Messdaten umfasst, die Bedingungen in der Sauna (130) beschreiben, und zum Übertragen der gepufferten Messdaten an das Fernsteuergerät (120).

10. Zusatzeinrichtung nach einem der Ansprüche 4 bis 9, **gekennzeichnet durch** Umfassen von zwei voneinander unabhängigen zweiten Temperatursensoren (140).

11. Zusatzeinrichtung nach Anspruch 10, **dadurch gekennzeichnet, dass** die Zusatzeinrichtung umfasst Mittel zum Vergleichen von Temperaturen, die von den beiden voneinander unabhängigen zweiten Temperatursensoren (140) gemessen wurden, und zum Implementieren eines Überhitzungsschutzes auf der Grundlage der gemessenen Temperaturen, so dass, wenn die von der Sauna (100) gemessene Temperatur einen bestimmten Grenzwert erreicht oder die von verschiedenen zweiten Temperatursensoren (140) gemessenen Temperaturen sich in einer bestimmten Weise entwickeln, unterbricht das Steuergerät die Stromversorgung des Sauna- (100) -ofens (130).

12. Zusatzeinrichtung nach einem der Ansprüche 5 bis 11, **gekennzeichnet durch**:
einen dritten Sensor, der so angeordnet ist, dass er aus der Luft der Sauna (100) Feuchtigkeit, Lärm oder Kohlendioxidkonzentration misst; und
Mittel zum Steuern des Ofens (130) auf der Grundlage der aus der Sauna (100) gemessenen Temperatur und einer von dem dritten Sensor gemessenen Größe.

13. Sauna, umfassend:
einen Saunaofen (100), der eine erste Steuerung zum Steuern von Heizen des Saunaofens aufweist, wobei die erste Steuerung zum Steuern des Ofens einen ersten Temperatursensor, eine Temperatursteuerschaltung und optional einen Überhitzungsschutz (132) des Saunaofens umfasst; und
die Zusatzeinrichtung nach einem der Ansprüche 4 bis 12 zum Steuern von Heizen des Saunaofens (100).

## Revendications

1. Un procédé de commande d'un poêle de sauna (130) dans un sauna, lequel poêle de sauna (130) a une première commande pour commander le chauffage du poêle de sauna, la première commande comprenant, pour commander le poêle, un premier capteur de température, un circuit de commande de la température et éventuellement une protection (132) contre la surchauffe du poêle de sauna ;
**caractérisé par** :
le fait de commander le poêle de sauna à l'aide d'un dispositif accessoire configuré pour fournir une deuxième commande qui est fonctionnellement parallèle à la première commande, en provoquant par la deuxième commande :
le fait de mesurer la température du sauna par un deuxième capteur de température (140) de la deuxième commande ;
le fait de commander du poêle de sauna (130), sur la base de la température mesurée par le deuxième capteur (140), en interrompant de manière répétée l'alimentation électrique du poêle de sauna (130) en interrompant le circuit de commande de la température de la première commande, la protection (132) contre la surchauffe de la première commande, ou l'alimentation (40) ;
la première commande étant réglée à une première température qui n'est pas destinée à être dépassée.

2. Le procédé selon la revendication 1, **caractérisé en ce que** la température du sauna est commandée localement par la deuxième commande en fonction de paramètres de commande reçus au moyen d'une interface utilisateur d'un circuit de commande (110, 111) de la deuxième commande.

3. Le procédé selon la revendication 1, **caractérisé en ce que** la température du sauna est commandée localement par la deuxième commande en fonction de paramètres de commande reçus avec un serveur Web d'un circuit de commande (110, 111) de la deuxième commande.

4. Un dispositif accessoire pour commander le chauffage d'un poêle de sauna (100) qui a une première commande pour commander le chauffage du poêle de sauna, la première commande comprenant, pour commander le poêle, un premier capteur de température, un circuit de commande de la température et éventuellement une protection (132) à circuit de commande de la température du poêle de sauna ;
**caractérisé par le fait que** dispositif accessoire comprend une deuxième commande qui est fonctionnellement parallèle à la première commande et qui comprend :
un deuxième capteur de température (140) pour mesurer la température du sauna ; et
un circuit de commande (110, 111) pour commander le poêle de sauna (130), sur la base de la température mesurée par le deuxième capteur de température (140), en utilisant des moyens d'interruption pour interrompre de manière répétée l'alimentation électrique du poêle de sauna (130) en interrompant le circuit de commande de la température de la première commande, la protection (132) contre la surchauffe de la première commande, ou l'alimentation électrique (40) ;
la première commande étant réglée à une première température qui n'est pas destinée à être dépassée.

5. Le dispositif accessoire selon la revendication 4, **caractérisé en ce que** le circuit de commande (110, 111) comprend une interface utilisateur locale pour recevoir des paramètres de commande et le circuit de commande est configuré de façon à commander localement le poêle de sauna sur la base des paramètres de commande.

6. Le dispositif accessoire selon la revendication 4, **caractérisé en ce que** le circuit de commande (110, 111) comprend un serveur Web pour recevoir des paramètres de commande et le circuit de commande est configuré pour commander localement le poêle de sauna sur la base des paramètres de commande.

7. Le dispositif accessoire selon l'une quelconque des revendications 5 à 6, **caractérisé en ce que** le circuit de commande (110, 111) comprend des moyens pour relayer la température mesurée par le deuxième capteur de température (140) vers un équipement (120) de commande à distance.

8. Le dispositif accessoire selon la revendication 7 ; **caractérisé en ce que** le circuit de commande (110, 111) comprend des moyens pour recevoir des données de commande en provenance de l'équipement distant (120) et par le fait que ledit circuit de commande est agencé pour utiliser les données de commande reçues pour commander le poêle (130) ou le sauna (100).

9. Le dispositif accessoire selon la revendication 7 ou la revendication 8, **caractérisé en ce que** le circuit de commande (110, 111) comprend des moyens pour mettre en mémoire tampon des données de mesure décrivant les conditions dans le sauna (130) et pour transmettre les données de mesure mises en mémoire tampon à l'équipement (120) de commande à distance.

10. Le dispositif accessoire selon l'une quelconque des revendications 4 à 9, **caractérisé par le fait qu'**il comprend deux deuxièmes capteurs de température (140) indépendants l'un de l'autre.

11. Le dispositif accessoire selon la revendication 10 ; **caractérisé en ce que** le dispositif accessoire comprend des moyens pour comparer les températures mesurées par les deux deuxièmes capteurs de température (140) indépendants l'un de l'autre et pour mettre en œuvre une protection contre la surchauffe sur la base des températures mesurées de sorte que lorsque la température mesurée depuis le sauna (100) atteint une température déterminée limite ou que les mesures de température mesurées par différents deuxièmes capteurs (140) évoluent de manière déterminée, l'équipement de commande interrompt l'alimentation électrique du poêle (130) du sauna (100).

12. Le dispositif accessoire selon l'une quelconque des revendications 5 à 11 ; **caractérisé par** :
un troisième capteur agencé pour mesurer l'humidité, le bruit ou la concentration en dioxyde de carbone dans l'air du sauna (100) ; et
des moyens pour commander le poêle (130) sur la base de la température mesurée à partir du sauna (100) et d'une quantité mesurée par le troisième capteur.

13. Un sauna comprenant :
un poêle de sauna (100) qui a une première commande pour commander le chauffage du poêle de sauna, la première commande comprenant, pour la commande du poêle, un premier capteur de température, un circuit de commande de la température et éventuellement une protection (132) contre la surchauffe du poêle de sauna ; et
le dispositif accessoire selon l'une quelconque des revendications 4 à 12 pour commander le chauffage du poêle de sauna (100).
